(19) Europäisches Patentamt
European Patent Office
Office européen des brevets

(11) **EP 1 818 251 A1**

(12) **EUROPEAN PATENT APPLICATION**

(43) Date of publication:
**15.08.2007 Bulletin 2007/33**

(51) Int Cl.:
*B62M 3/00* (2006.01)    *B62K 19/16* (2006.01)
*B29C 70/34* (2006.01)    *B29C 70/48* (2006.01)
*B29C 70/86* (2006.01)    *B29C 70/08* (2006.01)
*B29C 70/44* (2006.01)

(21) Application number: **06425086.3**

(22) Date of filing: **14.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **CAMPAGNOLO S.r.l.**
**36100 Vicenza (VI) (IT)**

(72) Inventors:
• **Ciavatta, Gabriele**
  **I-00171 Roma (IT)**
• **Feltrin, Mauri**
  **I-36024 Nanto (Vicenza) (IT)**

(74) Representative: **Castiglia, Paolo et al**
**Porta, Checcacci & Associati S.p.A.**
**Via Trebbia, 20**
**20135 Milano (IT)**

(54) **Bicycle pedal crank, intermediate product and method for manufacturing such a pedal crank**

(57)    A bicycle pedal crank (1) is described, comprising an elongated body (2) extending along a longitudinal axis X-X and having a first end portion (5) comprising a first seat (38) for coupling with a bicycle bottom bracket, a second end portion (10) comprising a second seat (39) for coupling with a pedal, an intermediate portion (15) extending between said first end portion (5) and said second end portion (10) and comprising an inner portion (20) without structural strength, a first reinforcement structure (35) and a second reinforcement structure (25) facing said inner portion (20) and said first reinforcement structure (35) and comprising at least one bundle (25) of structural fibres having at least in part a first orientation. The intermediate portion (15) of the pedal crank (1) has a section perpendicular to said longitudinal axis X-X in which the inner portion (20) occupies a space defined by a first area (20a) having a first surface extension and by a second area (20b) having a second surface extension and in which the second reinforcement structure (25) occupies a space having a surface extension equal to the difference between said first (20a) and second (20b) areas.

Fig.1

**Description**

The present invention relates to a bicycle pedal crank.

The invention also relates to an intermediate product and to a core used for manufacturing such a pedal crank. The invention further relates to a method for manufacturing the aforementioned pedal crank.

A constant requirement of manufacturers of bicycles and/or of bicycle components, above all of racing bicycles, is to reduce the overall weight of the bicycle and, therefore, of the various components of the bicycle to as low as possible, at the same time ensuring, if not even improving, the characteristics of structural strength of such components.

In order to satisfy this requirement bicycle components have been developed, and in particular pedal cranks, made from composite materials comprising unidirectional continuous structural fibres, or else fibres in the form of pieces or small sheets arranged randomly, incorporated in a polymeric material. Structural fibres, indeed, substantially contribute to the structural strength of the pedal crank.

French patent FR 2 636 386 discloses a pedal crank with a core made from expanded polyurethane arranged between two inserts and a winding of unidirectional structural fibres wound in a loop around the inserts and the core. Other layers of woven structural fibres with different orientation to that of the aforementioned unidirectional fibres are wound around the entire body of the pedal crank.

The Applicant observes that, in the pedal crank described in the aforementioned French patent, the resistance to bending, torsion and traction is allocated to layers of structural fibres, in which the fibres of a layer have a different orientation to that of the fibres of an adjacent layer. Consequently, the various layers of fibres have different rigidities and deform differently to each other following the different stresses to which the pedal crank is subjected during pedalling. Such a difference in deformation inevitably leads to the detachment of the various layers, thus reducing the useful life of the pedal crank.

US 5,941,135 describes a hollow pedal crank obtained by winding a fabric of structural fibres impregnated with resin around an air chamber and bending the air chamber around an insert, so as to obtain a cavity that surrounds the insert after the cross-linking treatment of the resin and the removal of the air chamber.

The Applicant has found that the pedal crank described in the aforementioned US patent has, at the end portions thereof, points of non-homogeneity that constitute points of concentration of the tensions and, therefore, weakening points of the pedal crank. Such points of discontinuity, in particular, are localised on the fabric at the side thereof that sticks to the insert and are caused by the fact that the fabric shrivels on such a side and stretches out on the opposite side.

The Applicant has considered the problem of providing a pedal crank having a resistance to breaking higher than that of known pedal cranks.

The Applicant has also considered the problem of providing a pedal crank having a hollow end area without points of concentration of tension.

The present invention therefore relates, in a first aspect thereof, to a bicycle pedal crank comprising an elongated body extending along a longitudinal axis X-X and having:

- a first end portion comprising a first seat for coupling with a bicycle bottom bracket;
- a second end portion comprising a second seat for coupling with a pedal;
- an intermediate portion extending between said first end portion and said second end portion and comprising an inner portion without structural strength, a first reinforcement structure and a second reinforcement structure arranged between said inner portion and said first reinforcement structure and comprising at least one bundle of structural fibres having at least in part a first orientation;

characterised in that said intermediate portion has a section perpendicular to said longitudinal axis X-X in which said inner portion occupies a space defined by a first area having a first surface extension and by a second area having a second surface extension and in which said second reinforcement structure occupies a space having a surface extension equal to the difference between said first and second areas.

Advantageously, the pedal crank of the present invention has an excellent compromise between lightness and structural strength. Indeed, the second reinforcement structure is arranged at the areas of the pedal crank most stressed in operation, the other areas being hollow or made from material without structural capability. Moreover, in such a pedal crank, advantageously, when a stress is transmitted from the first reinforcement structure to the second reinforcement structure through their mutual contact surfaces, the second reinforcement structure is free to deform at the surface thereof which faces the inner portion of the pedal crank. Indeed, since the inner portion of the pedal crank does not have structural capability, at the interface surface between second reinforcement structure and inner portion no constraint tension is generated that, acting in contrast to the deformation stress of the second reinforcement structure, would cause the detachment of the second reinforcement structure from the first reinforcement structure. Advantageously, in the case in which the inner portion is defined by a cavity, the constraint tensions are completely zero.

Preferably, the second reinforcement structure is arranged in said perpendicular section so that each surface portion of said second reinforcement structure that faces said first reinforcement structure is opposite a respective surface portion of said second reinforcement structure that faces said inner portion.

Preferably, the fibres of said second reinforcement structure are unidirectional continuous structural fibres extending, at said intermediate portion, substantially parallel to said longitudinal axis X-X. Such fibres, advantageously, give the pedal crank a structural resistance to traction stresses.

Preferably, the fibres of said first reinforcement structure are unidirectional continuous structural fibres extending substantially along at least one direction inclined with respect to said longitudinal axis X-X by a first predetermined angle. More preferably, said first predetermined angle is equal to about 45°. The Applicant has indeed found that this inclination is optimal for giving the pedal crank characteristics of resistance to traction, bending and torsion stresses.

The fibres of the first reinforcement structure can however be pieces of fibres or small sheets of fabric having a random arrangement.

Preferably, the aforementioned structural fibres are incorporated in a composite material, preferably polymeric.

Preferably, the first and the second end portion of the pedal crank comprise a composite material comprising structural fibres arranged randomly and incorporated in a polymeric material. Advantageously, the structural fibres arranged randomly, for example in the form of small sheets of fabric or pieces of fibres, are capable of flowing when subjected to pressure in a mould and therefore are able to optimally fill the end areas of the cavity of the mould so as to form the end portions of the pedal crank. Such end portions, being in any case made from a material comprising structural fibres, have the desired characteristics of structural strength.

Preferably, the structural fibres in the composite material, be they continuous or in pieces arranged randomly, are selected from the group comprising: carbon fibres, glass fibres, aramidic fibres, boron fibres, ceramic fibres and combinations thereof, carbon fibres being most preferred.

Preferably, the polymeric material in the composite material is a thermosetting material. More preferably the thermosetting material comprises an epoxy resin. However, the possibility of using a thermoplastic material is not excluded.

Preferably, the elongated body of the pedal crank has a first face adapted to face a bicycle frame and a second face opposite said first face and the second reinforcement structure of the intermediate portion of the pedal crank is closer to said second face than to said first face.

In a first embodiment of the pedal crank of the present invention, in particular in the case of a left pedal crank, the second reinforcement structure also extends at at least one of said end portions and, at said at least one of said end portions, is closer to said first face than to said second face.

In a second embodiment of the pedal crank of the present invention, in particular in the case of a right pedal crank, such a pedal crank comprises at least one reinforcement structure also at at least one of said end portions and the reinforcement structure, at said at least one of said end portions, is closer to said second face than to said first face.

In both of the embodiments discussed above, advantageously, the second reinforcement structure is arranged at the area of the pedal crank most stressed during pedalling. Such an area, in the left pedal crank, is the one at the area for coupling with the bottom bracket, on the side facing towards the bicycle frame, whereas in the right pedal crank is the face of the pedal crank facing outwards.

In the case of the left pedal crank, the reinforcement structure of the end portion of the pedal crank can be an extension of the second reinforcement structure of the intermediate portion of the pedal crank. Preferably, however, the reinforcement structure of the end portion of the pedal crank is distinct from the reinforcement structure of the intermediate portion of the pedal crank, as shall be described more clearly hereafter.

Preferably, the intermediate portion of said elongated body has a section perpendicular to said longitudinal axis X-X in which said second reinforcement structure has a height equal to about half the height of said inner portion. In this way a hollow, and therefore light pedal crank is obtained, in which the second reinforcement structure is arranged at the part of the pedal crank most stressed in operation.

Preferably, the aforementioned inner portion is defined by a first cavity. In alternative and less preferred embodiments, the inner portion can be made from material without structural capability, like for example expanded polyurethane.

Preferably, the second reinforcement structure extends longitudinally along said elongated body and winds in a loop around said first and second end portions and said intermediate portion. Advantageously, a reinforcement structure made in this way gives the pedal crank a high resistance to traction loads.

More preferably, the elongated body of the pedal crank further comprises, at at least one of said end portions, at least one holding element of a portion of said second reinforcement structure. Advantageously, such a holding element, during the moulding process of the pedal crank, contributes to keep tensioned and in position the fibres of the second reinforcement structure at the end portions of the pedal crank. The presence of structural fibres is therefore ensured at the areas of the pedal crank most stressed during pedalling, among which there is in particular the end portion of the pedal crank for coupling with the bottom bracket of the bicycle. Even more advantageously, the holding element ensures that, during moulding, due to the flowing of the filling material the fibres do not shrivel in the end portions of the pedal crank. The Applicant has indeed found that the structural fibres, if bent excessively, can break. A possible shrivelling would thus generate weakening points in the structure of the body of the pedal crank.

Preferably, the holding element has a small thickness at an outer surface portion thereof facing said inner portion of said intermediate portion of said elongated body. Advantageously, this allows the core adapted to form the lightened inner portion of the pedal crank to be brought closer towards the end area of the pedal crank itself and therefore allows a pedal crank to be obtained in which the lightened inner portion has greater longitudinal extension.

For example, the holding element can be defined by a ring nut adapted to be screwed into an outer threading formed on a forming element of the end portion of the pedal crank, but any other type of coupling is not excluded.

Preferably, the holding element, given that it is intended to remain imprisoned in the finished pedal crank, is made from a light material, like a composite material or a metal alloy. The weight of the pedal crank thus remains low.

More preferably, the holding element is made from phenolic resin loaded with glass fibre, the content of said glass fibres preferably being equal to 40-50%. The Applicant has found that a holding element thus made gives excellent performance results combined with a particularly low cost.

Preferably, at least one of said first and second end portions comprises, at said seat, a respective coupling hole.

More preferably, the pedal crank further comprises, at said coupling hole, a plurality of centring elements of a forming element of said end portion.

Such centring elements are preferably made from the same material as the pedal crank and, more preferably, extend canti-levered from said coupling seat inside the coupling hole.

Preferably, the pedal crank further comprises a second cavity extending around said coupling hole. The cavity around the coupling hole advantageously allows an even more lightened pedal crank to be obtained.

Preferably, an insert adapted to allow the coupling of the pedal crank with the bottom bracket of the bicycle or with a pedal is inserted into the coupling hole.

Preferably, the second cavity is an extension of the first cavity formed at the intermediate portion of the pedal crank. Nevertheless, the possibility that the cavity formed in the end portion of the pedal crank and the cavity formed in the intermediate portion of the pedal crank can be distinct and separate is not excluded.

Preferably, the second cavity has a height at least in part shorter than the height of the first cavity, so that the pedal crank, at the coupling areas with the bottom bracket and with the pedal, has areas of increased thickness suitable for ensuring the desired structural strength.

Nevertheless, alternative embodiments in which the second cavity has a height equal to that of the first cavity, or to that of the insert inserted into the respective coupling seat formed in the end portion of the pedal crank are not excluded.

In a specific embodiment of the pedal crank of the present invention, the first and the second end portion both comprise a respective second cavity extending around the respective coupling seat.

As already stated, the pedal crank of the present invention can be a left pedal crank or a right pedal crank. In the case in which it is a right pedal crank, it comprises, at the end portion thereof for coupling with the bottom bracket of the bicycle, a plurality of spokes that, preferably, comprise respective cavities that branch from the second cavity formed around the coupling seat provided in the end portion of the pedal crank. A particularly light right pedal crank is thus made.

Preferably, the bundle of unidirectional fibres that constitutes the second reinforcement structure of the intermediate portion of the pedal crank extends along said spokes around the respective cavities and follows the profile thereof, so as to ensure that the pedal crank has structural strength also at said spokes.

Preferably, the height of the cavities of the spokes is greater than that of the cavity around the coupling seat formed in the end portion of the pedal crank. A thickened area around the seat for coupling with the bottom bracket is thus obtained in the pedal crank; such thickening ensures the desired characteristics of structural strength in this area of the pedal crank that is particularly stressed during pedalling. Such an area, in particular, is the area for coupling with the bottom bracket, on the side facing outwards.

Preferably, the pedal crank of the present invention comprises a layer of continuous structural fibres wound in a spiral around said coupling seat. This is to enhance the characteristics of resistance to stress of the pedal crank at the aforementioned area for coupling with the bottom bracket.

In a second aspect thereof, the invention relates to an intermediate product for manufacturing a bicycle pedal crank, comprising a core having an elongated body extending along a longitudinal axis X-X, a first reinforcement structure and a second reinforcement structure comprising at least one bundle of structural fibres having at least in part a first orientation, characterised in that it comprises a section perpendicular to said longitudinal axis X-X in which said core occupies a space defined by a first area having a first surface extension and by a second area having a second surface extension and in which said second reinforcement structure occupies a space having a surface extension equal to the difference between said first and second areas.

Advantageously, the intermediate product described above can be used to manufacture the pedal crank of the present invention, and thus allows the advantages mentioned above with reference to such a pedal crank to be obtained.

Preferably, the intermediate product of the present invention comprises, individually and/or in combination, all of the preferred structural characteristics described above with reference to the pedal crank and correlated to the presence, composition and arrangement of unidirectional structural fibres incorporated in a composite material, possibly a filling material.

Preferably, the second reinforcement structure is arranged in said perpendicular section in such a way that each surface portion of the second reinforcement structure that faces the first reinforcement structure is opposite a respective surface portion of the second reinforcement structure that faces the core.

Preferably, the fibres of the bundle of fibres of the second reinforcement structure are unidirectional continuous structural fibres extending substantially parallel to said longitudinal axis X-X and the fibres of the first reinforcement structure are unidirectional continuous structural fibres extending substantially along at least one direction that is inclined, preferably by 45°, with respect to said longitudinal axis X-X.

Even more preferably, the aforementioned intermediate product also comprises at least one first layer of filling material capable of flowing under pressure and arranged between the core and the second reinforcement structure. More preferably, at least one second layer of filling material is associated with the first reinforcement structure at the outside thereof. Such a filling material is intended to form the end portions of the pedal crank following a pressure moulding operation of the intermediate product thus arranged.

Preferably, the elongated body of the core comprises opposite longitudinal sides provided with respective housing seats of respective portions of the fibres of said bundle of fibres.

Preferably, each housing seat is defined by a side surface of the elongated body of the core and by a projecting surface that projects laterally from said side surface. Advantageously, such a projecting surface, when the intermediate product is inserted into the cavity of the mould to manufacture the pedal crank, is provided so as to be arranged between the pressure element of the mould and a portion of the second reinforcement structure defined by the aforementioned bundle of fibres so that, when the pressure element is actuated, the projecting surface exerts a uniform pressure on such a portion of second reinforcement structure keeping tensioned the fibres of said structure and thus avoiding the shrivelling thereof due to the flow of the filling material.

This is particularly advantageous if the bundle of fibres of the second reinforcement structure also embraces two forming elements of the end portions of the pedal crank. The tension generated by the thrusting of the aforementioned projecting surface of the core indeed prevents the flowing of the filling material on two opposite sides of the aforementioned forming elements causing a shrivelling of the fibres of said reinforcement structure at said forming elements, such shrivelling generating weakening points in the finished pedal crank.

Preferably, the core is made from a metallic material having a low melting point to allow it to be removed by melting when the pedal crank has been manufactured. The material having low melting point is in particular a material capable of melting at a temperature slightly higher than the cross-linking temperature of the composite material. In this way the core allows very high pressures to be applied that optimally compact the composite material and the filling material, inducing an intense degasification.

Preferably, in the case in which one wishes to make a pedal crank having a cavity around the seats for coupling with the bottom bracket and/or with the pedal, the core comprises a central body portion and two rings integrally associated with said elongated body at opposite ends of said central body portion. The two rings create the cavities in the end portions of the pedal crank whereas the central body portion of the core creates the cavity at the intermediate body portion of the pedal crank.

Preferably, a ring of said pair of rings has a height at least in part shorter than the height of said central body portion. Such a ring of shorter height is adapted to create the cavity at the end portion for coupling with the bottom bracket of the bicycle. Advantageously, the fact that such a ring has a shorter height than that of the central body portion of the core makes it possible to not exert a pressure on the portion of bundle of structural fibres supported by the holding element during the moulding of the pedal crank, thus ensuring correct tensioning of such fibres.

Preferably, at least part of said ring has a height shorter than the height of the projecting surface of the central body portion of the core. The ring can also have at least one body portion having a height greater than that of the remaining body portion.

The other ring of said pair of rings can have a height substantially equal to the height of said projecting surface or equal to that of the other ring.

Preferably, the aforementioned rings comprise respective positioning elements extending towards the inside of said rings. Advantageously, such positioning elements, pressing in the moulding step against the forming inserts of the end portions of the pedal crank, prevent the core from moving.

In a preferred embodiment thereof, the core comprises, at one of said two rings, a central hole and a plurality of spokes that extend radially outwards from said central hole. Such a core is advantageously used in the manufacture of a right pedal crank, where the spokes of the pedal crank are used to support the gear wheels of the sprocket assembly of the bicycle.

Preferably, the spokes of the core have a height greater than the height of the ring at said central hole. Advantageously, the pedal crank obtained using such a core therefore comprises, around the seat for coupling with the bottom bracket of the bicycle, a thickened area that ensures a high structural strength in an area where there is notoriously a high concentration of tensions.

Preferably, a layer of continuous structural fibres is wound in a spiral around said central hole. More preferably, the aforementioned bundle of structural fibres extends along said spokes, following the profile thereof. The structural strength of the finished pedal crank is thus increased at said spokes.

Preferably, in the case in which one wishes to make a right pedal crank, the projecting surface defined on the sides of the elongated body of the core extends parallel to said axis X-X for a part having a length shorter than the length of the central body portion of the core. This promotes a thickening of the body of the pedal crank at the joining area between intermediate portion and end portion for coupling with the bottom bracket of the bicycle, i.e. where there is notoriously a high concentration of tensions.

In a third aspect thereof, the invention relates to a core for manufacturing a hollow bicycle pedal crank, comprising an elongated body extending along a longitudinal axis X-X, characterised in that said elongated body comprises, at opposite longitudinal sides thereof, a side surface and a projecting surface that projects laterally from said side surface.

Advantageously, the core described above can be used to manufacture the pedal crank of the present invention, and therefore allows the advantages mentioned above with reference to such a pedal crank to be obtained.

Preferably, the core of the present invention comprises, individually and/or in combination, all of the preferred structural characteristics described with reference to the core of the intermediate product for manufacturing the pedal crank of the present invention described above.

In a fourth aspect thereof, the invention relates to a method for manufacturing a bicycle pedal crank, comprising the steps of:

- providing a core adapted to define an inner cavity of an intermediate portion of a pedal crank, said core comprising an elongated body extending along a longitudinal axis X-X;
- providing two forming elements of opposite end portions of said pedal crank;
- providing an intermediate product comprising said core, a first reinforcement structure and a second reinforcement structure arranged between said core and said first reinforcement structure and comprising at least one bundle of structural fibres having at least in part a first orientation, said intermediate product having a section perpendicular to said longitudinal axis X-X in which said core occupies a space defined by a first area having a first surface extension and by a second area having a second surface extension and in which said second reinforcement structure occupies a space having a surface extension equal to the difference between said first and second areas;
- associating said forming elements with said intermediate product, said forming elements being arranged between said core and said second reinforcement structure at opposite free ends of said core;
- introducing said intermediate product with said forming elements into a cavity of a mould together with at least one mass of filling material comprising a polymeric material and capable of flowing under pressure, said mould being equipped with a pressure element and said cavity having the shape of said pedal crank;
- applying a predetermined pressure to said pressure element to make said filling material flow in said cavity;
- heating said mould to a temperature corresponding to the cross-linking temperature of said polymeric material;
- opening said mould and removing the formed pedal crank.

Through this method it is advantageously possible to manufacture the pedal crank of the present invention.

Preferably, the second reinforcement structure is housed in a pair of housing seats formed on opposite longitudinal sides of said core.

More preferably, each housing seat is defined by a side surface of said core and by a projecting surface that projects laterally from said side surface and said intermediate product is inserted in said cavity of said mould so that said pressure element acts upon a first portion of said second reinforcement structure through said projecting surface.

Preferably, the method of the present invention further comprises the step of providing a holding element of a second portion of said second reinforcement structure on at least one of said forming elements so that said holding element acts upon said second reinforcement structure on the opposite side to said projecting surface of said core.

Preferably, the step of providing an intermediate product comprises the step of winding at least one bundle of unidirectional continuous structural fibres in a loop around said two forming elements and said core.

Preferably, the core consists of a metallic material having a low melting point, and the method of the present invention further comprises, after said step of heating said mould, the steps of:

- forming at least one hole on a surface of said pedal crank;
- heating said pedal crank up to the melting point of said metallic material having low melting point to allow it to flow out.

In this way, advantageously, a cavity is obtained at the space occupied by the core thus manufacturing a pedal crank having the desired characteristics of lightness.

Preferably, the melting point is higher than the cross-linking temperature of said polymeric material by a value ΔT of between about 1°C and about 25°C. More preferably, the melting point is higher than the cross-linking temperature of said polymeric material by a value ΔT equal to about 5°C.

Preferably, the first reinforcement structure comprises unidirectional continuous structural fibres that extend along a preferential direction of extension and the step of providing said intermediate product comprises the step of arranging said at least one layer of structural fibres so that said preferential direction of extension is inclined with respect to said longitudinal axis X-X by a predetermined angle, preferably equal to about 45°.

Preferably, the method further comprises, before the step of insertion of the intermediate product and of the mass of filling material in the cavity of the mould or after the aforementioned insertion step and before the step of application of the predetermined pressure, the step of preheating the intermediate product and said at least one mass of filling material bringing it to a predetermined preheating temperature for a predetermined preheating time. This preheating step is used to make the composite material of the first reinforcement structure and possibly of the layer of structural fibres that wind in a loop around the core and the aforementioned forming elements more easily malleable during moulding and the filling material more easily capable of flowing under pressure.

The parameters of the preheating step are selected so as to achieve homogeneous heating without the polymeric components aging excessively. A first preferred range of values is given by a temperature of between about 60° and about 100°, maintained for a time of between about 5 and about 70 minutes. An even more preferred range of values is given by a temperature of between about 80° and about 100° maintained for a time of between about 5 and about 60 minutes. A particularly preferred range of values is given by a temperature of between about 85° and about 90° maintained for a time of between about 35 and about 55 minutes. In this way it is possible to serve a mould with a limited number of preheating ovens.

Preferably, the step of inserting the intermediate product into the cavity of the mould together with the at least one mass of filling material comprises the step of providing at least one first layer of filling material between the core and the first reinforcement structure.

More preferably, at least one second layer of filling material is also inserted outside of said first reinforcement structure.

In this way it is possible to obtain an optimal distribution of the filling material in the cavity of the mould and therefore an end product of high quality both in terms of structure and appearance.

Preferably, the aforementioned filling material is a composite material comprising portions of structural fibres, preferably pieces or small sheets of fibres arranged randomly and incorporated in a polymeric material.

Preferably, the predetermined pressure exerted by the pressure element during the moulding of the pedal crank is between about 5 bar and 400 bar, more preferably between 40 and 300 bar and even more preferably between 200 and 300 bar.

The structural fibres, continuous or in pieces, and the polymeric material of the composite material are selected as described above with reference to the pedal crank of the present invention.

The present invention also relates, in a further aspect thereof, to a bicycle pedal crank, comprising an elongated body extending along a longitudinal axis X-X and having:

- a first end portion comprising a first seat for coupling with a bicycle bottom bracket;
- a second end portion comprising a second seat for coupling with a pedal;
- an intermediate portion extending between said first end portion and said second end portion;

wherein at least one of said first and second end portions comprises, at said seat, a coupling hole and a cavity extending around said coupling hole.

Preferably, at least one of said first and second end portions is at least in part made with a cross-linkable composite material capable of flowing under pressure before cross-linking.

Advantageously, such a pedal crank comprises end portions provided with respective cavities around respective coupling holes; such portions are formed through moulding using a cross linkable composite filling material capable of flowing under pressure around the inserts. The filling material is distributed homogeneously in the cavity of the mould without creating points of non-homogeneity that would constitute points of concentration of tension and, therefore, weakening points of the structure.

Preferably, said cavity continuously surrounds said coupling hole.

Preferably, such a pedal crank comprises all of the preferred structural characteristics discussed above.

In a further aspect thereof, the invention relates to a core for manufacturing a hollow bicycle pedal crank, comprising an elongated body extending along a longitudinal axis X-X, characterised in that said elongated body comprises a central body portion and two rings integrally associated with said elongated body at opposite ends of said central body portion.

Such a core can be used to manufacture the pedal crank described above and preferably has all of the structural characteristics described above.

Further characteristics and advantages of the pedal crank of the present invention shall become clearer from the following description of some preferred embodiments thereof, made hereafter, for indicating and not limiting purposes, with reference to the attached drawings. In such drawings:

- figure 1 is a perspective view partially in section of a left pedal crank according to the present invention;
- figure 2 is a perspective view of a core for manufacturing the pedal crank of figure 1;
- figure 3 is a perspective view that illustrates a preparation step of a preferred embodiment of an intermediate product for manufacturing the pedal crank of figure 1;
- figure 4 is a perspective view of a preferred embodiment of an intermediate product for manufacturing the pedal crank of figure 1;
- figure 5 is a cross section view along the line V-V of the intermediate product of figure 4;
- figure 6 is a cross section view along the line VI-VI of the pedal crank of figure 1;
- figures 7 and 7a are perspective views of alternative embodiments of the core of figure 2;
- figure 8 is a perspective view of a core for manufacturing a right pedal crank according to the invention;
- figure 8a is a top view of a preferred embodiment of the core of figure 8;
- figure 8b is a view of a detail of the core of figure 8a;
- figure 9 is a perspective view that illustrates a preparation step of a preferred embodiment of an intermediate product for manufacturing a right pedal crank according to the invention;
- figure 10 is a longitudinal section view of a right pedal crank manufactured with the core of figure 8;
- figure 11 is a section view of a mould for manufacturing the pedal crank of figure 1, having the intermediate product of figure 4 in its cavity.

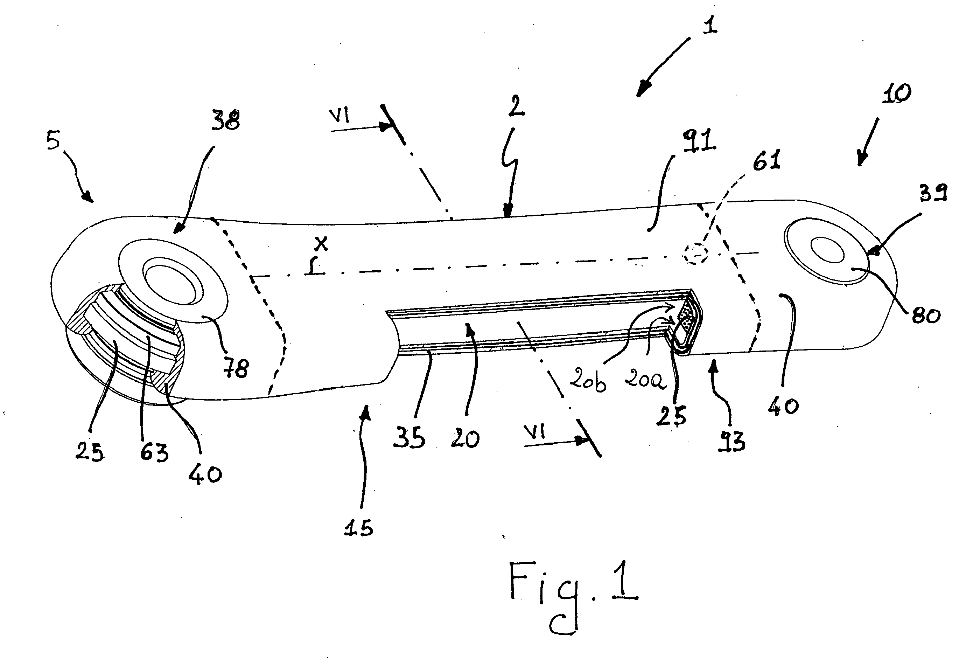

With reference to figure 1, a bicycle pedal crank, in particular a left pedal crank, in accordance with the invention is wholly indicated with 1.

The pedal crank 1 comprises an elongated body 2 extending along a longitudinal axis X-X and having a first end portion 5 comprising a first seat 38 for coupling with a bottom bracket (not shown) of the bicycle, a second end portion 10 comprising a second seat 39 for coupling with a pedal (not shown), and an intermediate portion 15 extending between such end portions 5, 10. On the pedal crank 1 a front face 91, which, in conditions of assembly onto the bicycle, faces outwards, and a rear face 93, which, in conditions of assembly onto the bicycle, faces towards the frame of the bicycle are identified.

The elongated body 2 is made in a single piece of composite material, comprising structural fibres incorporated in a polymeric material. Typically, the structural fibres are selected from the group consisting of carbon fibres, glass fibres, aramidic fibres, ceramic fibres, boron fibres and combinations thereof, carbon fibres being preferred. The polymeric material is typically a thermosetting material, preferably comprising an epoxy resin. However, the possibility of using a thermoplastic material is not excluded.

The structural fibres are suitably arranged inside the elongated body 2, so as to form different structures that react to different types of stresses.

In particular, the intermediate portion 15 comprises an inner portion substantially without structural strength and an outer reinforcement structure. In the illustrated preferred embodiment, the inner portion consists of a cavity 20.

In accordance with the invention, the outer reinforcement structure comprises a tubular structure 35, arranged around the cavity 20 and extending longitudinally for a part not longer than the longitudinal extension of the intermediate portion 15 (approximately defined in figure 1 by the two broken lines), and preferably equal to such an extension. In no case does the tubular structure 35 reach the coupling seats 38, 39.

The function of the tubular structure 35 is essentially to provide adequate resistance to bending and torsion stresses.

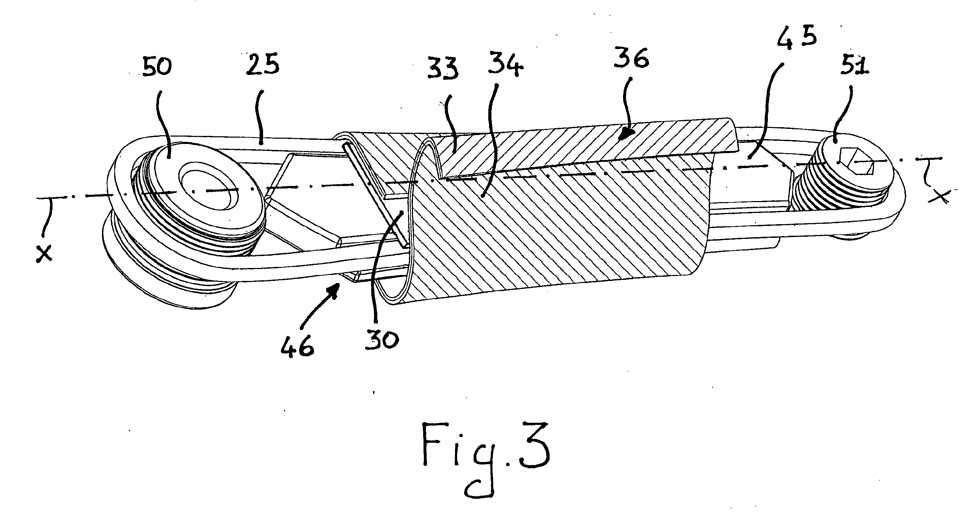

The tubular structure 35 consists of at least one sheet 36 of composite material wound many times around the longitudinal axis X-X, as made clearer hereafter with reference to the method for manufacturing the pedal crank 1. In the preferred embodiment illustrated here, the sheet 36 comprises two layers 33, 34 of unidirectional continuous structural fibres having a respective preferential direction of extension inclined with respect to the longitudinal axis X-X (figure 3). It has been observed that, to ensure optimal resistance to torsion and bending stresses, it is preferable that the preferential direction of extension of the structural fibres of one layer be inclined with respect to the preferential direction of extension of the structural fibres of the other layer by about 90° and that such preferential directions of extension be both inclined by about 45° with respect to the longitudinal axis X-X.

The elongated body 2 preferably also comprises an intermediate reinforcement structure. In the preferred embodiments described here, such an intermediate reinforcement structure consists of a bundle 25 of unidirectional continuous structural fibres that extends longitudinally in the elongated body 2, winding in a loop around the end portions 5, 10 and the intermediate portion 15. The bundle 25 thus arranged essentially has the function of resisting the traction loads.

At the intermediate portion 15, the bundle 25 crosses the cavity 20 twice and is arranged between it and the tubular structure 35.

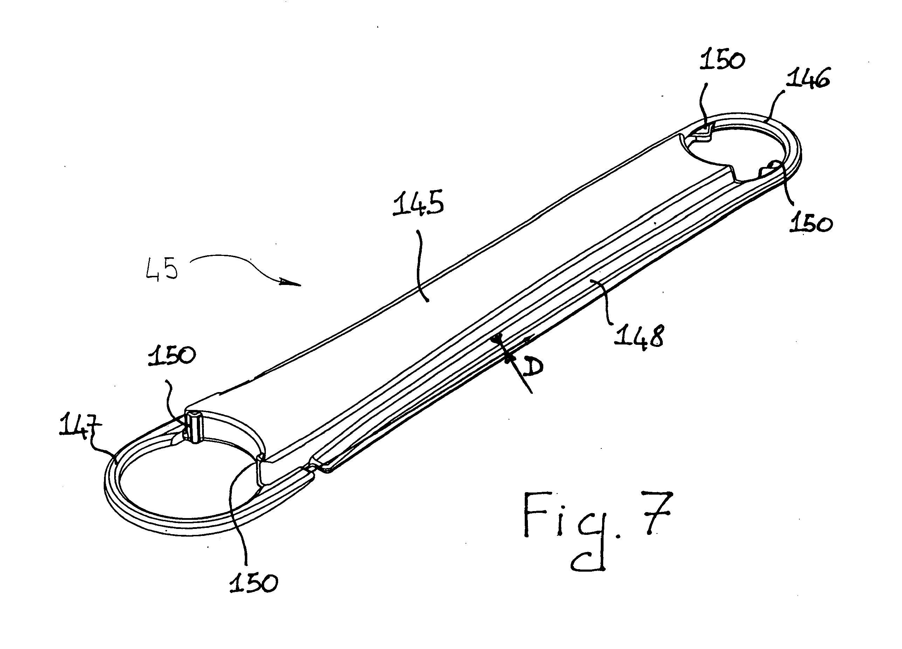

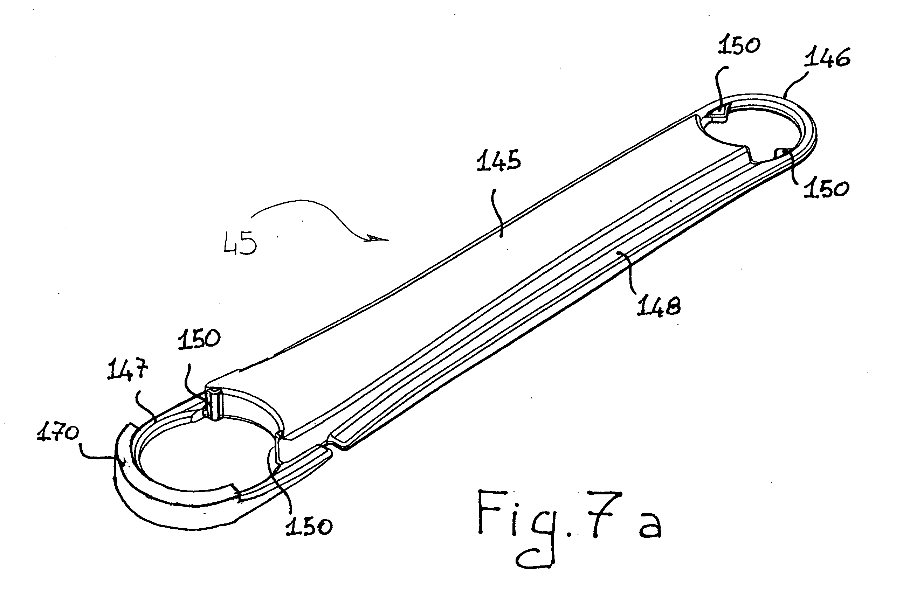

What has been described can be seen in detail in the cross section of the intermediate portion 15 shown in figure 6. Going from the inside towards the outside, the cavity 20 and the intermediate reinforcement structure, which in this cross section comprises two branches of the bundle 25 and is arranged, with respect to the cavity 20, closer to the front face 91 of the pedal crank 1 are encountered first.

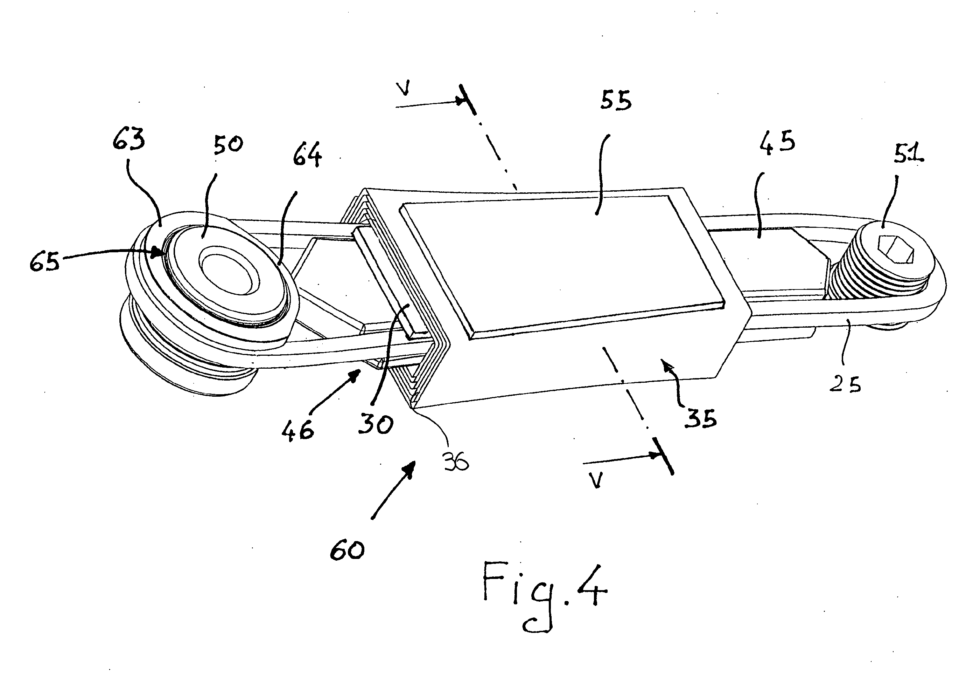

The two branches of the bundle 25 have a substantially rectangular section with a height preferably equal to about half the height of the cavity 20. In particular, the cavity 20 occupies a space defined by a first bottom area 20a having a certain surface extension and by a second top area 20b having a smaller surface extension (in figure 4 such areas are separated by a broken separation line) and the two branches of the bundle 25 occupy a space having a surface extension equal to the difference of the areas 20a, 20b.

In general, the section of the two branches of the bundle 25 can be whatever; nevertheless, it is important that each portion of the surfaces 26 of each branch that faces the outer reinforcement structure, however it is configured, is opposite a respective surface portion 27 facing the cavity 20, or rather, in general, facing the inner portion substantially without structural strength of the intermediate portion 15.

Preferably, the intermediate portion 15 has a substantially rectangular section and the start and end of the sheet 36 wound to form the tubular structure 35 are arranged at a central area of one of the sides of the section, unlike what is illustrated. The Applicant has indeed found that the corners of the section are points of concentration of the tensions and has thought to position the start and the end of the sheet 36 far from these corners to avoid possible starts of fractures.

Going towards the outside layers 30 and 30' of filling material at the interface between cavity 20 and tubular structure 35 are encountered. Preferably, a layer of filling material is also provided at the interface between cavity 20 and intermediate reinforcement structure 25 and between intermediate reinforcement structure and tubular structure 35, so that the bundle 25 is in contact with the filling material and not with the tubular structure. Furthest towards the outside there is finally a layer 40 of filling material, which ensures uniformity of the outer surface of the pedal crank 1.

The aforementioned filling material is preferably a composite material comprising structural fibres with random distribution, for example in the form of pieces of fibre or small sheets of fabric, incorporated in polymeric material, as described in patent application US 2005/0012298 to the same Applicant, incorporated here for reference. The filling material must in any case have the characteristic of flowing under pressure, so as to be able to reach all of the desired points of the pedal crank 1 during its manufacture through moulding, as shall be described in detail hereafter.

The same filling material preferably also forms the end portions 5, 10.

As an alternative to what has been stated above, the bundle 25 can be arranged outside the tubular structure 35, or incorporated between its spirals.

In an alternative preferred embodiment (not illustrated) the cavity 20 also extends at one or both of the end portions 5, 10, embracing the coupling seats 38, 39. The height of the cavity 20 at the end portions 5, 10 can be equal to or less than its height at the intermediate portion 15. The difference in height can also involve just a sector of the end portions 5, 10. In the case in which the height is less, at the end portions 5, 10 the cavity 20 is defined closer to the rear face 39 of the pedal crank 1.

In alternative embodiments it is also possible to foresee respective cavities not communicating with the cavity 20 at one or both of the end portions 5, 10.

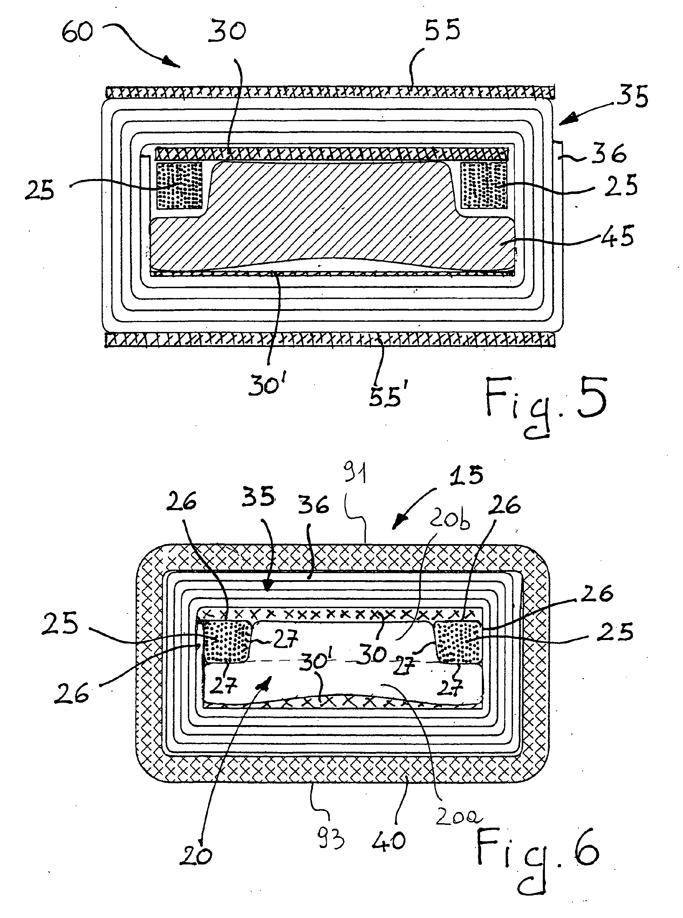

Figures 4, 5 show a preferred embodiment of an intermediate product 60 that can be used to manufacture the pedal crank 1.

The intermediate product 60 comprises a core 45, the bundle 25 of unidirectional continuous structural fibres that extends longitudinally around the core 45, the tubular structure 35 consisting of the at least one sheet 36 of composite material wound axially many times around the core 45 and the bundle 25, the two layers of filling material 30, 30' (only one of which can be seen in figure 4) arranged between each face of the core 45 and the tubular structure 35 and other two layers of filling material 55 and 55' applied to the outside of the tubular structure 35 (only one of which can be seen in figure 4). Two forming elements 50 and 51 of the opposite ends of the pedal crank are arranged on longitudinally opposite sides of the core 45 in such a way that the bundle 25 winds in a loop around the forming elements 50, 51 and the core 45.

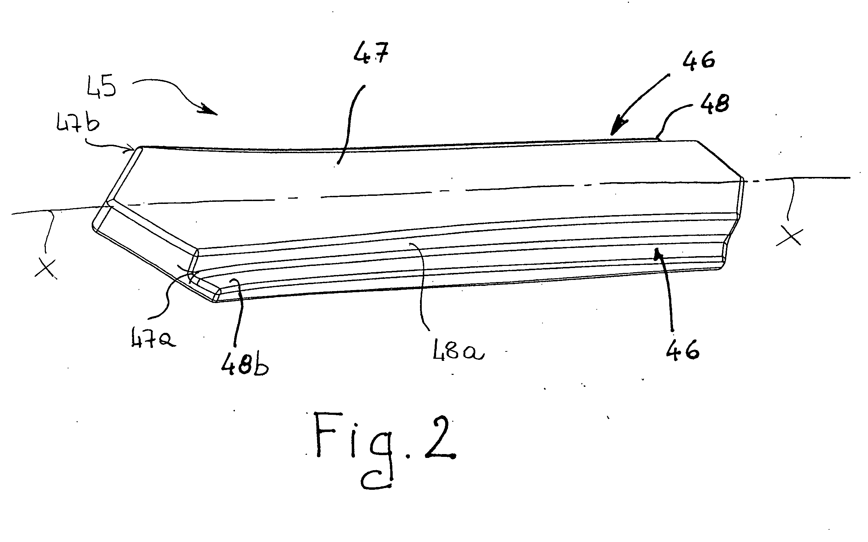

The core 45 (figure 2) consists of an elongated body 47 having a longitudinal axis adapted to define the longitudinal axis X-X in the finished pedal crank 1. The elongated body 47, at two opposite longitudinal sides 47a, 47b, comprises respective housing seats 46 adapted to receive the two branches of the bundle 25. The housing seats 46 are defined by a side surface 48a of the elongated body 47 and by a projecting surface 48b that projects laterally from such a side surface 48a. The projecting surface 48b preferably has a height equal to about half the height of the elongated body 47.

Figures 7 and 7a illustrate alternative embodiments of the core 45, particularly suitable for manufacturing a pedal crank 1 in which the cavity 20 also extends at the end portions 5, 10. In these embodiments the core 45 comprises a central elongated body 145 and two rings 146 and 147 integrally associated therewith at the opposite longitudinal ends thereof. Such rings are adapted to surround the forming elements 50, 51 and thus to form cavities around the coupling seats 38, 39 in the finished pedal crank.

The elongated body 145, like the elongated body 47 in the embodiment described above, comprises, at the two opposite longitudinal sides thereof, respective projecting surfaces 148 that project laterally.

The rings 146, 147 preferably have at least in part a height shorter than the height of the central body 145, so as not to compress the bundle 25 wound around the forming elements 50, 51 during the moulding operations.

The height of the rings 146, 147 can be the same as the height of the projecting surfaces 148 or different. In the embodiment of figure 7, in particular, the ring 146, adapted to form a cavity around the seat 39 for coupling with the pedal lies on the same longitudinal plane as the projecting surface 148, whereas the ring 147 adapted to form a cavity around the seat 38 for coupling with the bottom bracket, lies on a plane parallel to that of the projecting surface 148, but offset by a distance D.

Figure 7a, on the other hand, shows an embodiment in which the ring 147 has a portion of different thickness, and in particular greater thickness, with respect to that of the remaining portion of the ring 147. A similar configuration could also be present in the ring 146.

One or both of the rings 146, 147 can comprise positioning elements, which, pressing against the forming elements 50, 51 in the moulding step, prevent the core 45 from moving. In the embodiments illustrated here the positioning elements consist of a pair of small teeth 150 extending radially towards the inside of the ring 146, 147.

Irrespective of the embodiment of the core 45, to allow the removal by melting of the pedal crank 1 when this has been formed, the core 1 is made from a metal alloy having a low melting point (eutectic), preferably tin, antimony and lead. The alloy has a composition such as to have a melting point slightly higher Tf than the cross-linking temperature Tc of the polymeric material in the various composite materials used to make the body of the pedal crank 1. In particular it is preferable to respect the following relationship:

$$Tf = Tc + \Delta T$$

where Tf is between about 65°C and about 185°C and in any case is not more than about 200°C so as not to damage the composite material; Tc is between about 60°C and about 180°C; $\Delta T$ is preferably between about 1°C and about 25°C, about 5°C being the preferred value.

The forming elements 50, 51 can either be profile-creating inserts, which, when the pedal crank is formed, are removed and replaced with respective coupling inserts 78 and 80, respectively, for coupling with the bottom bracket and with the pedal, or else they can consist of the coupling inserts 78, 80 themselves. In this last case the coupling inserts 78, 80 are co-moulded with the pedal crank as described in European patent application no. 05425576.5 to the same Applicant, incorporated here for reference.

One or both of the forming elements 50, 51 are associated with a holding element 63, so that, during the moulding of the pedal crank, it acts on the bundle 25 on the opposite side with respect to the projecting surface 46 (or 148) of the core 45. As holding element 63 it is possible for example to use a ring nut or a washer screwed onto an external threading 65 formed on the forming elements 50, 51, but the possibility of any other type of coupling is not excluded. In the embodiment of figure 4 the holding element 63 has an outer surface portion 64 of lesser thickness, which is intended to face towards the core 45. The advantage of such a configuration is that the core 45 can be moved more towards the insert 50.

In the case of a left pedal crank, like the one illustrated in figure 1, the area of maximum stress of the pedal crank is the area for coupling with the bottom bracket, on the side facing towards the frame. For this reason the holding element 63 holds the bundle 25 in this area, whereas in the intermediate portion 15 the bundle 25 is located on the opposite side due to the thrust of the projecting surface 46 (or 148) of the core. In practice, in a left pedal crank manufactured in accordance with the present invention, the bundle 25, going from the intermediate portion 15 of the pedal crank to the end portion 5 for coupling with the bottom bracket of the bicycle, has a substantially S-shaped arrangement.

Since, preferably, the holding element 63 remains trapped in the finished pedal crank, it is desirable for it to be of low weight, therefore it is preferably made from a composite material, of a type selected from those described for manufacturing the rest of the pedal crank, or from a metal alloy, like an aluminium alloy. It has been found that a ring nut made from phenolic resin loaded with 40-50% glass fibre gives excellent performance results combined with a particularly low cost.

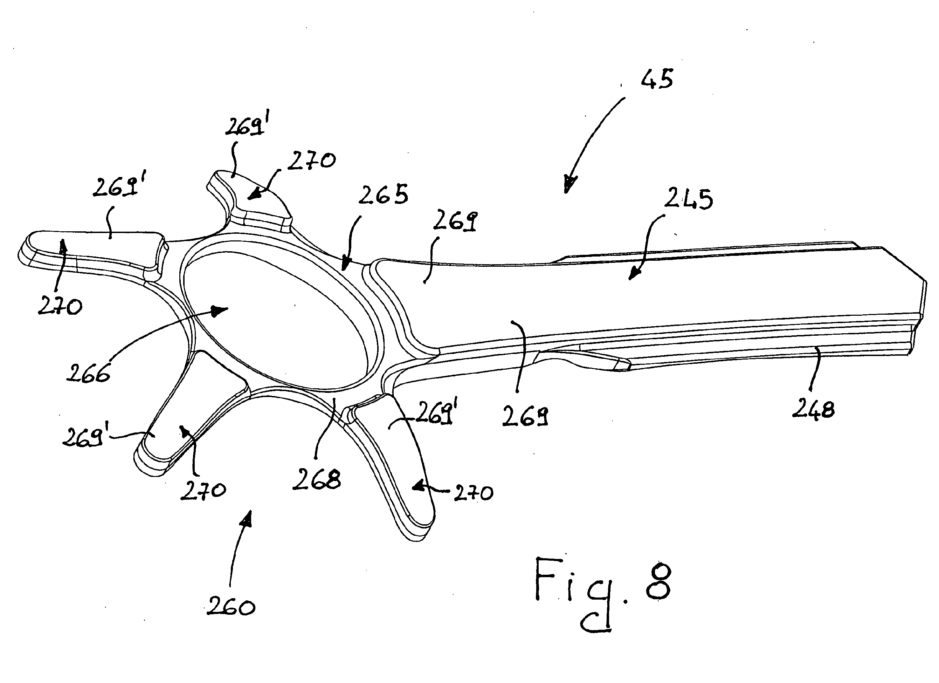

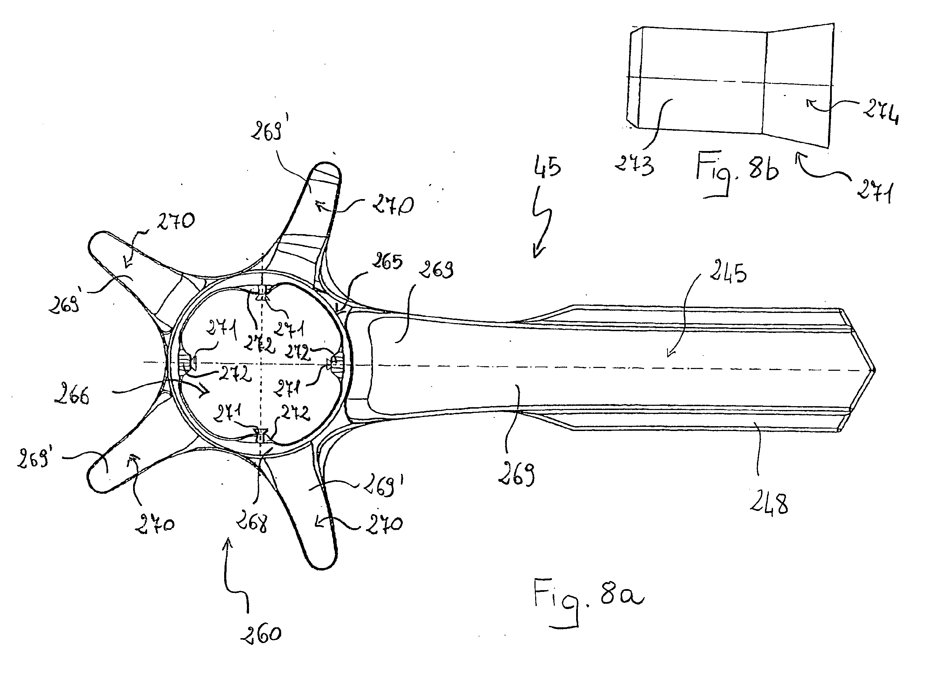

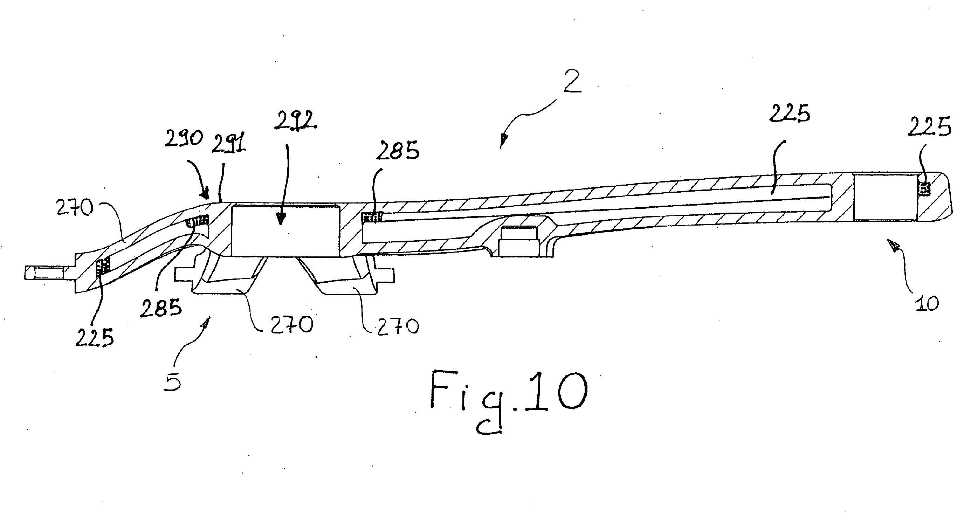

Figure 8 illustrates a further embodiment of the core 45, particularly suitable for manufacturing a right pedal crank, indicated with reference numeral 2 in figure 10, which has support spokes 250 of the gear wheels at the first end portion 5.

In this embodiment the core 45 comprises an elongated body 245 having an end defining a star 260 with four spokes 270, adapted to form respective cavities in the support spokes of the finished pedal crank.

The elongated body 245 has projecting surfaces 248 that project laterally from the two opposite longitudinal sides thereof. However, differently from what has been described for the embodiments of the core 45 adapted to the manufacture of the left pedal crank 1, the projecting surfaces 248 do not extend for the entire length of the elongated body 245, but rather they are interrupted before the join with the star-shaped portion 260. This promotes the thickening of the body made from composite material of the finished pedal crank at such a join, where there is notoriously a concentration of tensions.

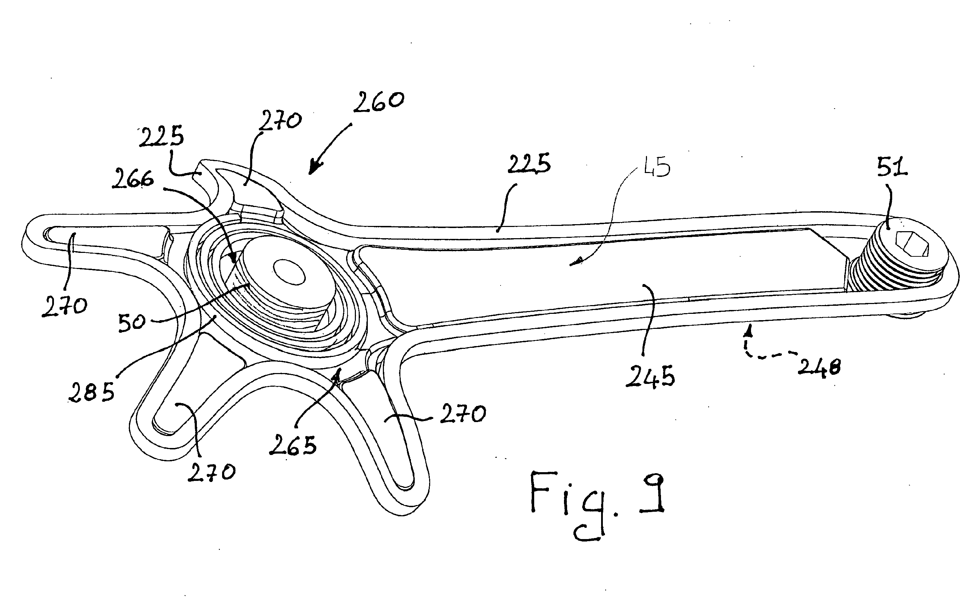

The spokes 270 project radially around a hole 266 having a diameter such as to allow the passage of the forming element 50 (figure 9). The periphery 265 of the hole 266 has a height shorter than the height of the spokes 270 and of the elongated body 245. In particular, the front face 268 of the periphery 265 of the hole 266 lies on a plane that is offset with respect to the front faces 269 and 269' of the elongated body 245 and of the spokes 270 respectively, so as to form a recess 265. The recess 265 has the purpose of making, at a front face 291 in the finished pedal crank 2, a thickened area 290 around a seat 292 for the insertion of the coupling insert 78 with the bottom bracket. The spokes of the finished pedal crank shall thus have respective cavities having a height greater than that of the cavity about the seat 292.

Figure 8a shows a preferred embodiment of the core 45 of figure 8. Such a core differs from the one illustrated in figure 8 for the sole reason that it comprises four centring elements 271 associated with the periphery 265 of the central hole 266 and extending radially towards the inside of the central hole 266. In particular, the centring elements 271 are associated with the periphery 265 of the central hole 266 at respective thickened areas 272 of such a periphery extending radially towards the inside of the central hole 266.

Such centring elements 271, advantageously, are made from a composite material, of a type selected from those described for manufacturing the rest of the pedal crank. For example, they can be made from phenolic resin loaded with 40-50% glass fibre, or a metal alloy, like an aluminium alloy. The centring elements 271 are to be lost, in the sense that they shall constitute part of the finished pedal crank. Their function is that of keeping the forming element in centred position inside the central hole 266 during the moulding of the pedal crank, at the same time avoiding the core from being able to go into abutment against such a forming element (a similar function is carried out by the holding element 63 in a right pedal crank). Typically, indeed, the forming insert of the end portion of the pedal crank has an outer threading for making a corresponding internal threading in the hole of the coupling seat made in the end portion of the pedal crank adapted to couple with the bottom bracket of the bicycle. A possible abutment of the core against such a threading would indeed lead to the generation of areas of discontinuity in the thread formed on the finished pedal crank. On the other hand, the fact that the centring elements 271 are made from the same material as the pedal crank ensures that, during moulding, they behave like the rest of the material that shall constitute the finished pedal crank, contributing to the generation of a continuous and uniform profile in the seat for coupling with the bottom bracket of the bicycle.

As better illustrated in figure 8b, each centring element 271 comprises a substantially cylindrical body portion 273 and a substantially frusto-conical body portion 274. The centring element 271 is coupled with the respective thickened area 272 of the periphery 265 of the central hole 266 through the respective cylindrical body portion 273, so that its frusto-conical body portion 274 extends canti-levered inside the central hole 266. Advantageously, the coupling with the periphery 265 through the frusto-conical body portion 274 prevents a possible slipping of the centring elements 271 from the respective seats 272 due to micro-breaks or micro-fractures at such a coupling area; such slipping would lead to the presence of solid bodies free to move inside the pedal crank, with the consequent generation of noise during pedalling.

In the embodiment illustrated in figure 8a four centring elements 172 arranged at 90° from each other are used. In alternative embodiments, three centring elements are used arranged at 120° apart, or two centring elements arranged symmetrically with respect to the longitudinal axis X-X and positioned in the semi-circle closest to the elongated body 245 of the core 45.

Figure 9 shows in particular how bundles of unidirectional continuous structural fibres, adapted to define an intermediate reinforcement structure in the finished pedal crank, are preferably associated with the core 45 to form an intermediate product for manufacturing the right pedal crank 2. In particular, a first bundle 225 is wound around the forming element 51 and around the core 245 so as to be supported by the projecting surfaces 248 and so as to follow the profile of the spokes 270; a second bundle 285 is housed in the recess 265 wound in a spiral around the hole 266. Alternatively, the spiral can be formed from a portion of the bundle 225.

In the case of the right pedal crank, the holding element 63 associated with the forming element 50 is superfluous and can be omitted. Indeed, it has been noted that, due to the star-shaped configuration, during moulding the filling material flows radially around the forming element 50 and therefore does not generate the shrivelling of the bundles 225 and 285, which can however typically occur during moulding of the right pedal crank 1.

The absence of holding elements at the end portions of the right pedal crank ensures that, due to the thrusting of the projecting surface 148, 248 of the core 45 during the moulding of the pedal crank, the bundle 25 is arranged along the entire elongated body of the pedal crank on the side facing outwards, right at the area of maximum stress of the right pedal crank, which is indeed located at the area for coupling with the bottom bracket, on the side facing outwards. Advantageously, also the bundle 285 wound in a spiral illustrated in figure 10 is arranged on this side.

With particular reference to figures 3, 4 and 10, a preferred embodiment of a method for manufacturing a pedal crank in accordance with the present invention shall now be described. The steps of the method shall be illustrated with particular reference to the left pedal crank 1, but what is described can also be applied without substantial modifications to the manufacture of the right pedal crank 2.

In a first step of the method a core 45 is provided having a shape corresponding to the cavity 20 that is intended to be obtained in the finished pedal crank.

Then the two forming elements 50, 51 adapted to form the coupling seats 38, 39 at the end portions 5, 10 of the finished pedal crank are provided.

Then the intermediate product 60 is formed (figures 3 and 4).

The bundle 25 of unidirectional continuous structural fibres is wound in a loop around the core 45, in the housing seats 46, and around the forming elements 50, 51, arranged at the opposite longitudinal ends of the core 45. The layers of filling material 30, 30' are rested on the core 45 on which the sheet 36 is wound so that the preferential directions of extension of the unidirectional continuous structural fibres of the layers 33, 34 form an angle of about 45° with respect to the longitudinal axis X-X of the core 45 (figure 3). The layers of filling material 55, 55' are then applied outside the wound sheet 36.

The man skilled in the art will note that the layers of filling material 30, 30', 55, 55' can have whatever arrangement, their purpose being to flow when subjected to pressure towards the areas of a mould 70 at which the end portions 5 and 10 of the pedal crank 1 will be formed. Amongst the various possibilities it is also possible to provide the necessary filling material, instead of in layers, in masses positioned in the aforementioned areas.

In a subsequent step of the method, the intermediate product 60 thus obtained is preheated bringing it to a predetermined preheating temperature for a predetermined preheating time which are sufficient to make the polymeric material of the composite material capable of flowing under pressure. Preferably, the intermediate product 60 is kept at a preheating temperature of between about 80°C and about 100°C for a sufficient time to heat it homogeneously. More preferably it is kept at a value of between about 85° and about 90° for a time of between about 35 and about 55 min, so that the core has the time to reach such a temperature before the most outer layer of composite material ages excessively.

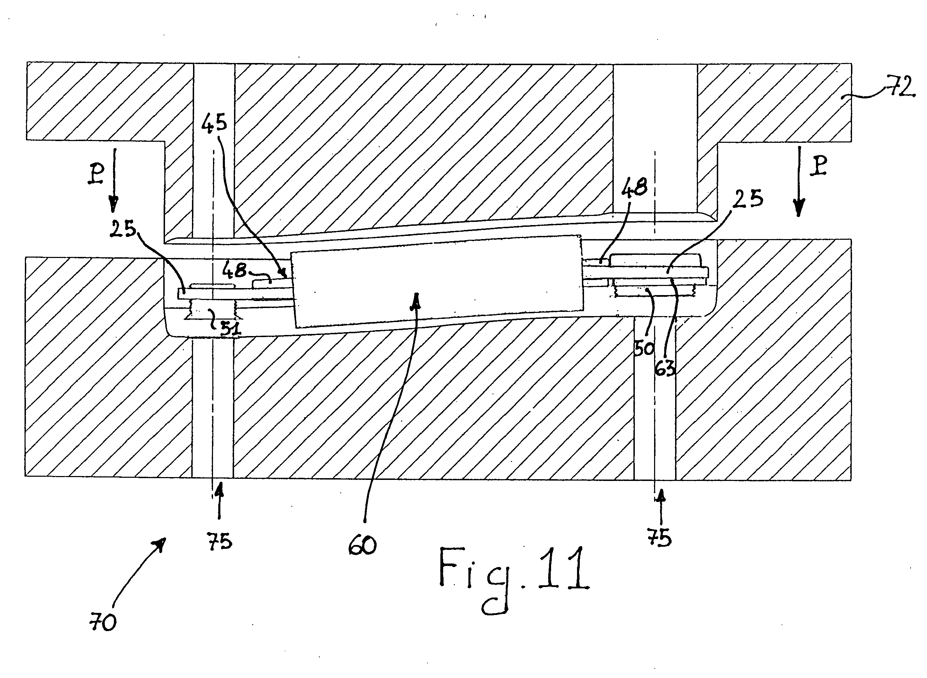

When the intermediate product 60 is sufficiently hot it is inserted into the cavity of a mould 70 (figure 11) having the shape of the pedal crank 1 that it is wished to obtain and comprising a pressure element 72 with a predetermined thrusting direction P. In particular, the intermediate product 60 is inserted in such a way that the bundle 25 is closer to the front face 91 of the finished pedal crank than to the rear face 93, and in such a way that the projecting surfaces 48 of the core 45 are arranged between the bundle 25 and the pressure element 72 along the thrusting direction P. The holding elements 63, if present, are arranged in such a way as to hold the bundle 25 counteracting the thrust in the direction P. The two forming elements 50, 51 are preferably fixed to the bottom of the mould 70 through screws applied through holes 75.

As an alternative to what has been described, the intermediate element 60 can be preheated directly inside the mould 70.

In a subsequent step of the method a pressure of between about 5 and about 350 bar is applied through the pressure element 72. Preferably, the pressure applied is selected in the upper area of the aforementioned range, to promote compacting of the material and degasification. In particular, the preferred pressure value is between about 5 bar and about 400 bar, more preferably between about 40 and about 300 bar and even more preferably between about 200 and about 300 bar. The pressure exerted makes the filling material flow until it fills the areas corresponding to the end portions 5, 10 of the pedal crank 1. During the flowing of the filling material, the bundle 25 is kept under tension by the pressure exerted by the projecting surfaces 48 of the core 45, counteracted by the holding elements 63, in this way preventing shrivelling.

When the moulding step has ended the mould 70 is brought to a temperature corresponding to the cross-linking temperature Tc of the polymeric material present in the composite material forming the pedal crank 1 for a sufficient time.

In a subsequent step of the method the finished pedal crank 1 is removed from the mould 70.

After a subsequent cooling step, one or more holes 61 are formed in the pedal crank 1, preferably on the rear face 91 intended to face towards the frame of the bicycle, and taking care not to cross the bundle 25. The hole 61 is illustrated with a broken line in figure 1 precisely to highlight that it is on the rear face 93 and not on the front face 91. Then the pedal crank is heated up to the melting point Tf of the core 45, which therefore melts and flows out from the hole 61, leaving the cavity 20 free.

Optionally, a washing of the cavity 20 with oil at a predetermined temperature is carried out to remove the melting residues, possibly left stuck to the inner walls, and to avoid them generating undesired noises by detaching during use of the pedal crank.

The hole 61 is then closed preferably applying a cap of phenolic resin.

## Claims

1. Bicycle pedal crank, comprising an elongated body extending along a longitudinal axis X-X and having:

   - a first end portion comprising a first seat for coupling with a bicycle bottom bracket;
   - a second end portion comprising a second seat for coupling with a pedal;
   - an intermediate portion extending between said first end portion and said second end portion and comprising an inner portion without structural strength, a first reinforcement structure and a second reinforcement structure arranged between said inner portion and said first reinforcement structure and comprising at least one bundle of structural fibres having at least in part a first orientation;

   **characterised in that** said intermediate portion has a section perpendicular to said longitudinal axis X-X in which said inner portion occupies a space defined by a first area having a first surface extension and by a second area having a second surface extension and in which said second reinforcement structure occupies a space having a surface extension equal to the difference between said first and second areas.

2. Pedal crank according to claim 1, wherein said second reinforcement structure is arranged in said perpendicular section so that each surface portion of said second reinforcement structure that faces said first reinforcement structure is opposite a respective surface portion of said second reinforcement structure that faces said inner portion.

3. Pedal crank according to claim 1 or 2, wherein the fibres of said second reinforcement structure are unidirectional continuous structural fibres extending, at said intermediate portion, substantially parallel to said longitudinal axis X-X.

4. Pedal crank according to any one of the previous claims, wherein the fibres of said first reinforcement structure are unidirectional continuous structural fibres extending substantially along at least one direction inclined with respect to said longitudinal axis X-X by a first predetermined angle.

5. Pedal crank according to claim 4, wherein said first predetermined angle is equal to about 45°.

6. Pedal crank according to any one of claims 1 to 3, wherein the fibres of said first reinforcement structure are structural fibres having a random arrangement.

7. Pedal crank according to claim 6, wherein said structural fibres comprise pieces of fibres or small sheets of fabric.

8. Pedal crank according to any one of the previous claims, wherein said structural fibres are embedded in composite material.

9. Pedal crank according to any one of the previous claims, wherein said elongated body has a first face adapted to face a bicycle frame and a second face opposite said first face and wherein said second reinforcement structure is closer to said second face than to said first face.

10. Pedal crank according to claim 9, wherein said second reinforcement structure also extends at at least one of said end portions and wherein, at said at least one of said end portions, said second reinforcement structure is closer to said first face than to said second face.

11. Pedal crank according to claim 9, comprising at least one reinforcement structure also at at least one of said end portions and wherein, at said at least one of said end portions, said reinforcement structure is closer to said second face than to said first face.

12. Pedal crank according to claim 11, wherein said reinforcement structure is an extension of said second reinforcement structure.

13. Pedal crank according to claim 11, wherein said reinforcement structure is distinct from said second reinforcement structure.

14. Pedal crank according to any one of the previous claims, wherein said intermediate portion of said elongated body has a section perpendicular to said longitudinal axis X-X wherein said second reinforcement structure has a height equal to about half the height of said inner portion.

15. Pedal crank according to any one of the previous claims, wherein said inner portion is defined by a first cavity.

16. Pedal crank according to any one of the previous claims, wherein said first and second end portions comprise a composite material comprising structural fibres arranged randomly and incorporated in a polymeric material.

17. Pedal crank according to any one of the previous claims, wherein said structural fibres are selected from the group comprising: carbon fibres, glass fibres, aramidic fibres, boron fibres, ceramic fibres and combinations thereof.

18. Pedal crank according to any one of claims 4 to 17, wherein said composite material is a thermosetting polymeric material.

19. Pedal crank according to any one of the previous claims, wherein said second reinforcement structure extends longitudinally along said elongated body and winds in a loop around said first and second end portions and said intermediate portion.

20. Pedal crank according to claim 19, wherein said elongated body further comprises, at at least one of said end portions, at least one holding element of a portion of said second reinforcement structure.

21. Pedal crank according to claim 20, wherein said at least one holding element has a low thickness at an outer surface portion thereof facing said inner portion of said intermediate portion of said elongated body.

22. Pedal crank according to claim 20 or 21, wherein said at least one holding element comprises a ring nut.

**23.** Pedal crank according to any one of claims 20 to 22, wherein said at least one holding element is made from any one from a composite material and a metal alloy.

**24.** Pedal crank according to claim 23, wherein said at least one holding element is made from phenolic resin loaded with glass fibre.

**25.** Pedal crank according to claim 24, wherein the content of said glass fibres in said phenolic resin is equal to 40-50%.

**26.** Pedal crank according to any one of the previous claims, wherein at least one of said first and second end portions comprises, at said seat, a respective coupling hole.

**27.** Pedal crank according to claim 26, further comprising, at said coupling hole, a plurality of centring elements of a forming element of said end portion.

**28.** Pedal crank according to claim 27, wherein said centring elements are made from the same material as said pedal crank.

**29.** Pedal crank according to claim 27 or 28, wherein said centring elements extend canti-levered from said coupling seat inside said coupling hole.

**30.** Pedal crank according to any one of claims 26 to 29, further comprising a second cavity extending around said coupling hole.

**31.** Pedal crank according to any one of claims 26 to 30, comprising an insert inserted into said coupling hole.

**32.** Pedal crank according to any one of the previous claims, wherein said pedal crank is a right pedal crank and comprises, at said first end portion, a plurality of spokes.

**33.** Pedal crank according to claim 32 when dependent upon one of claims 26 to 31, wherein said spokes have respective cavities that branch from said second cavity formed around said insert.

**34.** Pedal crank according to claim 32 or 33, wherein said bundle of structural fibres extends along said spokes around the respective cavities.

**35.** Intermediate product for manufacturing a bicycle pedal crank, comprising a core having an elongated body extending along a longitudinal axis X-X, a first reinforcement structure and a second reinforcement structure comprising at least one bundle of structural fibres having at least in part a first orientation, **characterised in that** it comprises a section perpendicular to said longitudinal axis X-X in which said core occupies a space defined by a first area having a first surface extension and by a second area having a second surface extension and in which said second reinforcement structure occupies a space having a surface extension equal to the difference between said first and second areas.

**36.** Intermediate product according to claim 35, wherein said second reinforcement structure is arranged in said perpendicular section so that each surface portion of said second reinforcement structure that faces said first reinforcement structure is opposite a respective surface portion of said second reinforcement structure that faces said core.

**37.** Intermediate product according to claim 36, wherein the fibres of said second reinforcement structure are unidirectional continuous structural fibres extending substantially parallel to said longitudinal axis X-X.

**38.** Intermediate product according to claim 36 or 37, wherein the fibres of said first reinforcement structure are unidirectional continuous structural fibres extending substantially along at least one direction inclined with respect to said longitudinal axis X-X by a first predetermined angle.

**39.** Intermediate product according to claim 38, wherein said first predetermined angle is equal to about 45°.

**40.** Intermediate product according to any one of claims 36 to 39, wherein said elongated body of said core comprises opposite longitudinal sides provided with respective housing seats of respective portions of said second reinforcement structure.

**41.** Intermediate product according to any one of claims 35 to 40, wherein said core is made from a metallic material having a low melting point to allow its removal by melting when the pedal crank has been manufactured.

**42.** Core for manufacturing a hollow bicycle pedal crank, comprising an elongated body extending along a longitudinal axis X-X, **characterised in that** said elongated body comprises, at opposite longitudinal sides thereof, a side surface and a projecting surface that projects laterally from said side surface.

**43.** Core according to claim 42, comprising a central body portion and two rings integrally associate with said elongated body at opposite ends of said central body portion.

**44.** Core according to claim 43, wherein a ring of said pair of rings has a height at least in part shorter than the height of said central body portion.

**45.** Core according to claim 44, wherein at least part of said ring has a height shorter than the height of said projecting surface.

**46.** Core according to claim 45, wherein the other ring of said pair of rings has a height substantially equal to the height of said projecting surface.

**47.** Core according to any one of claims 43 to 46, wherein at least one ring of said pair of rings has at least one portion of ring having a height greater than the remaining portion of ring.

**48.** Method for manufacturing a bicycle pedal crank, comprising the steps of:

- providing a core adapted to define an inner cavity of an intermediate portion of a pedal crank, said core comprising an elongated body extending along a longitudinal axis X-X;
- providing two forming elements of opposite end portions of said pedal crank;
- providing an intermediate product comprising said core, a first reinforcement structure and a second reinforcement structure arranged between said core and said first reinforcement structure and comprising at least one bundle of structural fibres having at least in part a first orientation, said intermediate product having a section perpendicular to said longitudinal axis X-X in which said core occupies a space defined by a first area having a first surface extension and by a second area having a second surface extension and in which said second reinforcement structure occupies a space having a surface extension equal to the difference between said first and second areas;
- associating said forming elements with said intermediate product, said forming elements being arranged between said core and said second reinforcement structure at opposite free ends of said core;
- introducing said intermediate product with said forming elements into a cavity of a mould together with at least one mass of filling material comprising a polymeric material and capable of flowing under pressure, said mould being equipped with a pressure element and said cavity having the shape of said pedal crank;
- applying a predetermined pressure to said pressure element to make said filling material flow into said cavity;
- heating said mould to a temperature corresponding to the cross-linking temperature of said polymeric material;
- opening said mould and removing the formed pedal crank.

**49.** Method according to claim 48, wherein said second reinforcement structure is housed in a pair of housing seats formed on opposite longitudinal sides of said core.

**50.** Method according to claim 49, wherein each housing seat is defined by a side surface of said core and by a projecting surface that projects laterally from said side surface and said intermediate product is inserted into said cavity of said mould so that said pressure element acts upon a first portion of said second reinforcement structure through said projecting surface.

**51.** Method according to claim 50, further comprising the step of providing a holding element of a second portion of said second reinforcement structure on at least one of said forming elements so that said holding element acts on said second reinforcement structure on the opposite side to said projecting surface of said core.

**52.** Method according to any one of claims 48 to 51, wherein said step of providing an intermediate product comprises the step of winding at least one bundle of unidirectional continuous structural fibres in a loop around said two forming elements and said core.

**53.** Method according to any one of claims 48 to 52, wherein said core consists of a metallic material having a low melting point, said method further comprising, after said step of heating said mould, the steps of:

- forming at least one hole on a surface of said pedal crank;
- heating said pedal crank up to the melting point of said metallic material having low melting point to allow it to flow out.

**54.** Method according to any one of claims 48 to 53, wherein said first reinforcement structure comprises unidirectional continuous structural fibres that extend along a preferential direction of extension and said step of providing said intermediate product comprises the step of arranging said at least one layer of structural fibres so that said preferential direction of extension is inclined with respect to said longitudinal axis X-X by a predetermined angle.

**55.** Method according to claim 54, wherein said predetermined angle is equal to about 45°.

**56.** Method according to any one of claims 48 to 55, comprising, before said step of inserting said intermediate product and said at least one mass of filling material into the cavity of the mould or after said step of inserting said intermediate product and said at least one mass of filling material into the cavity of the mould and before said step of applying a predetermined pressure, the step of preheating said intermediate product and said at least one mass of filling material bringing it to a predetermined preheating temperature for a predetermined preheating time.

57. Method according to any one of claims 48 to 56, wherein said step of inserting said intermediate product and said at least one mass of filling material into the cavity of the mould comprises the step of providing at least one first layer of said filling material between said core and said first reinforcement structure.

58. Method according to claim 57, wherein said step of inserting said intermediate product and said at least one mass of filling material into the cavity of the mould comprises the step of providing at least one second layer of said filling material outside said first reinforcement structure.

59. Bicycle pedal crank, comprising an elongated body extending along a longitudinal axis X-X and having:

- a first end portion comprising a first seat for coupling with a bicycle bottom bracket;
- a second end portion comprising a second seat for coupling with a pedal;
- an intermediate portion extending between said first end portion and said second end portion;

wherein at least one of said first and second end portions comprises, at said seat, a coupling hole and a cavity extending around said coupling hole.

60. Pedal crank according to claim 59, wherein said at least one of said first and second end portions is at least in part made with a cross-linkable composite material capable of flowing under pressure before cross-linking.

61. Pedal crank according to claim 59 or 60, wherein said cavity continuously surrounds said coupling hole.

62. Pedal crank according to claim 59 or 60, wherein said cavity extends in said intermediate portion.

63. Pedal crank according to claim 62, wherein said cavity has, at said at least one of said first and second end portions, a height at least in part shorter than the height of said cavity at said intermediate portion.

64. Pedal crank according to any one of claims 59 to 63, wherein said first and second end portions both comprise a respective cavity extending around the respective coupling holes.

65. Pedal crank according to claim 64 when dependent upon claim 62, wherein said cavity has, at one of said first and second end portions, a height at least in part shorter than the height of said cavity at said intermediate portion and, at the other of said first and second end portions, a height equal to the height of said cavity at said intermediate portion.

66. Pedal crank according to any one of claims 63 to 65, wherein said cavity of shorter height is defined at said first end portion.

67. Pedal crank according to any one of claims 59 to 66, wherein said pedal crank is a right pedal crank and comprises, at said first end portion, a plurality of spokes.

68. Pedal crank according to claim 67, wherein said spokes have respective cavities that branch from said cavity formed around said insert.

69. Pedal crank according to claim 68, wherein the height of said cavity at said spokes is higher than that of said cavity around said coupling hole.

70. Pedal crank according to any one of claims 59 to 69, comprising a layer of continuous structural fibres wound in a spiral around said coupling hole.

71. Pedal crank according to any one of claims 67 to 70, wherein said bundle of structural fibres extends along said spokes around the respective cavities.

72. Pedal crank according to any one of claims 59 to 71, comprising an insert inserted into said coupling hole.

73. Core for manufacturing a hollow bicycle pedal crank, comprising an elongated body extending along a longitudinal axis X-X, **characterised in that** said elongated body comprises a central body portion and two rings integrally associated with said elongated body at opposite ends of said central body portion.

74. Core according to claim 73, wherein a ring of said pair of rings has a height at least in part shorter than the height of said central body portion.

75. Core according to claim 73 or 74, wherein at least one ring of said pair of rings has at least one portion of ring having a height greater than that of the remaining portion of ring.

76. Core according to any one of claims 73 to 75, wherein said rings comprise respective positioning elements extending radially towards the inside of said rings.

**77.** Core according to any one of claims 73 to 76, wherein one of said two rings comprises a central hole and a plurality of spokes that extend radially outwards from said central hole.

**78.** Core according to claim 77, wherein said spokes have a height greater than the height of said ring.

**79.** Core according to any one of claims 73 to 78, wherein said elongated body comprises, at opposite longitudinal sides thereof, a side surface and a projecting surface that projects laterally from said side surface, wherein said projecting surface extends parallel to said axis X-X for a part having a length shorter than the length of said central body portion.

Fig.1

EP 1 818 251 A1

Fig.2

EP 1 818 251 A1

Fig.3

EP 1 818 251 A1

Fig.4

Fig. 5

Fig. 6

Fig. 7

EP 1 818 251 A1

Fig.7a

EP 1 818 251 A1

Fig. 8

EP 1 818 251 A1

Fig. 8b

Fig. 8a

Fig. 9

Fig.10

Fig.11

**European Patent Office**

**EUROPEAN SEARCH REPORT**

Application Number

EP 06 42 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | FR 2 636 386 A (PEYRARD; ZODIAC) 16 March 1990 (1990-03-16) | 1,3,7,8, 12, 17-21, 23,26, 35,73, 75,76 | INV. B62M3/00 B62K19/16 B29C70/34 B29C70/48 B29C70/86 |
| Y | * the whole document * | 4,5 | B29C70/08 |
| A | | 42,48,59 | B29C70/44 |
| X | US 5 435 869 A (CHRISTENSEN ROLAND [US]) 25 July 1995 (1995-07-25) | 42,59,73 | |
| A | * column 4, line 59 - column 6, line 63; figures 1-6 * | 1,48 | |
| X | US 5 567 509 A (GAUTIER ANDRE [FR]) 22 October 1996 (1996-10-22) * column 6 - column 7; figures 1-3,4f * | 42 | |
| X | WO 03/024185 A2 (COMPOSITECH INC [US]; ORDING ANDREW [US]; BARKER AARON [US]) 27 March 2003 (2003-03-27) | 59 | |
| A | * page 8; figures 2,6 * | 1,48 | |
| X | US 2004/182197 A1 (CHIANG CHENG-HSUN [TW]) 23 September 2004 (2004-09-23) | 59 | |
| A | * the whole document * | 1,48 | |
| X | US 5 632 940 A (WHATLEY BRADFORD L [US]) 27 May 1997 (1997-05-27) | 59 | |
| A | * column 3 - column 7; figures 1-6,10-13 * | 1,35,48 | |
| Y | CA 1 090 151 A1 (EXXON RESEARCH AND ENGINEERING COMPANY) 25 November 1980 (1980-11-25) | 4,5 | |
| A | * page 6 - page 18; figures * | 1,48 | |

TECHNICAL FIELDS SEARCHED (IPC)

B62M
B62K
B29C

-/--

The present search report has been drawn up for all claims

| Place of search | Date of completion of the search | Examiner |
|---|---|---|
| Munich | 27 October 2006 | Jung, Wolfgang |

EPO FORM 1503 03.82 (P04C01)

**European Patent Office**

**EUROPEAN SEARCH REPORT**

Application Number

EP 06 42 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 5 941 135 A (SCHLANGER ET AL) 24 August 1999 (1999-08-24) * column 6, line 11 - line 43 * * column 8, line 21 - line 65 * * column 10, line 58 - line 64; figures 1A,13A-13C,20A,20B,21A-21D,22A * | 1,35,42, 48,59,73 | |
| A | EP 1 270 393 A1 (CAMPAGNOLO SRL [IT]) 2 January 2003 (2003-01-02) * the whole document * | 1,35,42, 48,59,73 | |
| A | EP 1 281 609 A2 (CAMPAGNOLO SRL [IT]) 5 February 2003 (2003-02-05) * paragraphs [0009], [0011] - [0015]; figures 4,5,11,13-16 * | 1,35,42, 48,59,73 | |
| A | EP 1 378 433 A (VAN RAEMDONCK JORIS [BE]) 7 January 2004 (2004-01-07) * the whole document * | 1,35,42, 48,59,73 | |
| A | WO 2005/068284 A (TORAY INDUSTRIES [JP]; SHIMANO KK [JP]; MASUDA YASUHISA [JP]; YOSHIOKA) 28 July 2005 (2005-07-28) * abstract; figures 1-6 * | 1,42,48, 59,73 | TECHNICAL FIELDS SEARCHED (IPC) |
| A | EP 1 486 413 A2 (CAMPAGNOLO SRL [IT]) 15 December 2004 (2004-12-15) * the whole document * | 35,42,73 | |
| A | US 4 811 626 A (BEZIN MICHEL [FR]) 14 March 1989 (1989-03-14) * the whole document * | 1,48,59 | |
| A | WO 03/000543 A (SEGATO STEFANO [IT]) 3 January 2003 (2003-01-03) * the whole document * | 1,35,48, 59 | |

-/--

The present search report has been drawn up for all claims

| Place of search | Date of completion of the search | Examiner |
|---|---|---|
| Munich | 27 October 2006 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 42 5086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 502 846 A2 (SHIMANO KK [JP]) 2 February 2005 (2005-02-02) * the whole document * | 1,35,48, 59 | |
| A | US 5 851 459 A (CHEN JASON [TW]) 22 December 1998 (1998-12-22) * the whole document * | 42,73 | |

TECHNICAL FIELDS
SEARCHED     (IPC)

The present search report has been drawn up for all claims

| Place of search | Date of completion of the search | Examiner |
|---|---|---|
| Munich | 27 October 2006 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 06 42 5086

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION
SHEET B**

Application Number

EP 06 42 5086

The Search Division considers that the present European patent application does not comply with the requirements of unity of invention and relates to several inventions or groups of inventions, namely:

1. claims: 1-34 and 48-58

        A bicycle pedal crank comprising
an elongated body (2) extending along a longitudinal axis
and having:
a first end portion comprising a first seat for
coupling with a bicycle bottom bracket;
a second end portion comprising a second seat for
coupling with a pedal;
an intermediate portion (15) comprising an inner portion
(20) without structural strength,
a first reinforcement structure (35) and a second
reinforcement structure (25),
said second reinforcement structure (25) being arranged
between the inner portion (20) and the first reinforcement
structure (35) and comprising at least one bundle of
structural fibres having at least in part a first
orientation.
The intermediate portion (15) has a section, perpendicular
to the longitudinal axis of the elongated body (2), in which
the inner portion (20) occupies a space defined by a first
area (20a) having a first surface extension and by a second
area (20b) having a second surface extension, in which the
second reinforcement structure (25) occupies a space having
a surface extension equal to the difference between the
first and second areas (20a, 20b).
        ---

2. claims: 35-41

        Intermediate product (60) for manufacturing a bicycle pedal
crank, comprising
a first reinforcement structure (35) and a second
reinforcement structure (25) comprising at least one bundle
of structural fibres having at least in part a first
orientation
and
a core (45) having an elongated body extending along a
longitudinal axis X-X.
The intermediate product (60) comprises a section
perpendicular to said longitudinal axis X-X in which said
core (45) occupies a space defined by a first
area having a first surface extension and by a second area
having a second surface extension and in which said second
reinforcement structure (25) occupies a space having a
surface extension equal to the difference between said first
and second areas.
        ---

3. claims: 42-47

| European Patent Office | LACK OF UNITY OF INVENTION SHEET B | Application Number EP 06 42 5086 |
|---|---|---|

The Search Division considers that the present European patent application does not comply with the requirements of unity of invention and relates to several inventions or groups of inventions, namely:

A core (45) for manufacturing a hollow bicycle pedal crank, comprising an elongated body extending along a longitudinal axis X?X, where
the elongated body comprises, at opposite longitudinal sides thereof, a side surface and a projecting surface that projects laterally from said side surface.
---

4. claims: 59-72

A bicycle pedal crank comprising
an elongated body (2) extending along a longitudinal axis and having:
a first end portion comprising a first seat for coupling with a bicycle bottom bracket;
a second end portion comprising a second seat for coupling with a pedal;
an intermediate portion extending between said first end portion and said second end portion;
wherein
at least one of said first and second end portions comprises, at said seat, a coupling hole and a cavity extending around said coupling hole.
---

5. claims: 73-79

A core for manufacturing a hollow bicycle pedal crank, comprising
an elongated body extending along a longitudinal axis, where said elongated body comprises
a central body portion and two rings integrally associated with said elongated body at opposite ends of said central body portion.
---

## ANNEX TO THE EUROPEAN SEARCH REPORT
## ON EUROPEAN PATENT APPLICATION NO.                    EP 06 42 5086

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | | Publication date | Patent family member(s) | | Publication date |
|---|---|---|---|---|---|
| FR 2636386 | A | 16-03-1990 | NONE | | |
| US 5435869 | A | 25-07-1995 | NONE | | |
| US 5567509 | A | 22-10-1996 | NONE | | |
| WO 03024185 | A2 | 27-03-2003 | NONE | | |
| US 2004182197 | A1 | 23-09-2004 | NONE | | |
| US 5632940 | A | 27-05-1997 | NONE | | |
| CA 1090151 | A1 | 25-11-1980 | NONE | | |
| US 5941135 | A | 24-08-1999 | AU | 8254098 A | 04-01-1999 |
| | | | CA | 2294374 A1 | 23-12-1998 |
| | | | EP | 0988216 A1 | 29-03-2000 |
| | | | WO | 9857840 A1 | 23-12-1998 |
| EP 1270393 | A1 | 02-01-2003 | AT | 318751 T | 15-03-2006 |
| | | | DE | 60209403 T2 | 24-08-2006 |
| | | | ES | 2259352 T3 | 01-10-2006 |
| | | | IT | TO20010621 A1 | 27-12-2002 |
| | | | US | 2003019325 A1 | 30-01-2003 |
| | | | US | 2006075846 A1 | 13-04-2006 |
| EP 1281609 | A2 | 05-02-2003 | CN | 1404978 A | 26-03-2003 |
| | | | IT | TO20010782 A1 | 03-02-2003 |
| | | | JP | 2003054478 A | 26-02-2003 |
| | | | US | 2003037638 A1 | 27-02-2003 |
| EP 1378433 | A | 07-01-2004 | NONE | | |
| WO 2005068284 | A | 28-07-2005 | EP | 1712462 A1 | 18-10-2006 |
| EP 1486413 | A2 | 15-12-2004 | CN | 1572650 A | 02-02-2005 |
| | | | JP | 2005001662 A | 06-01-2005 |
| | | | US | 2005012298 A1 | 20-01-2005 |
| US 4811626 | A | 14-03-1989 | DE | 3763809 D1 | 23-08-1990 |
| | | | EP | 0270388 A1 | 08-06-1988 |
| WO 03000543 | A | 03-01-2003 | IT | VI20010143 A1 | 27-12-2002 |
| EP 1502846 | A2 | 02-02-2005 | CN | 1576157 A | 09-02-2005 |
| | | | JP | 2005047382 A | 24-02-2005 |

EPO FORM P0459

For more details about this annex : see Official Journal of the European Patent Office, No. 12/82

## ANNEX TO THE EUROPEAN SEARCH REPORT
### ON EUROPEAN PATENT APPLICATION NO.

EP 06 42 5086

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | Publication date | Patent family member(s) | Publication date |
|---|---|---|---|
| EP 1502846 A2 | | US 2005022625 A1 | 03-02-2005 |
| US 5851459 A | 22-12-1998 | NONE | |

For more details about this annex : see Official Journal of the European Patent Office, No. 12/82

**EP 1 818 251 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2636386
- US 5941135 A
- US 20050012298 A
- EP 05425576 A